# EUROPÄISCHE PATENTSCHRIFT

(11) **EP 2 589 289 B1**
(45) Veröffentlichungstag und Bekanntmachung des Hinweises auf die Patenterteilung: **10.10.2018**
(21) Anmeldenummer: 12007462.0
(22) Anmeldetag: 31.10.2012
(51) Int. Cl.: A01M 7/00

(54) **Schwingungstilgung für das Spritzgestänge einer Feldspritze**
Oscillation damping for the spray bar of an agricultural sprayer
Amortissement d'oscillation pour la rampe de pulvérisation d'un pulvérisateur

(30) Priorität: 04.11.2011 DE 102011117805
(43) Veröffentlichungstag der Anmeldung: 08.05.2013
(73) Patentinhaber: Lemken GmbH & Co. KG, 46519 Alpen (DE)
(72) Erfinder: Büsch, Johannes, 47647 Kerken (DE); Basten, Alexander, 54338 Schweich-Issel (DE); Boeging, Michael, 49424 Lutten-Goldenstedt (DE); Surborg, Carsten, 46519 Alpen (DE); Dibbern, Axel, 47475 Kamp-Lintfort (DE)
(74) Vertreter: Schulte & Schulte

(56) Entgegenhaltungen:
- EP-B1- 1 273 228
- DE-A1- 2 934 020
- DE-A1- 3 739 291
- FR-A1- 2 671 262

## Beschreibung

Die Erfindung betrifft eine Feldspritze gemäß dem Oberbegriff des Patentanspruches 1. Üblicherweise weisen Feldspritzen ein Hubsystem mit Pendelsystem auf, mit dem das Spritzgestänge in der Höhe eingestellt werden kann und möglichst parallel zum Boden geführt wird. Um bei Lenkeinschlägen mit oder ohne Lenkdeichsel oder bei Abbremsungen oder Beschleunigungen das Spritzgestänge und ihre tragenden Teile zu entlasten, weisen derartige Spritzgestänge auch Federdämpfer auf, die in einem begrenzten Umfang eine horizontale Beweglichkeit des Spritzgestänges zulassen. Der europäischen Patentschrift EP 1 273 228 B1 ist eine Feldspritze mit Spritzgestänge mit zwei Gestängehälften zu entnehmen, bei der die beiden Gestängehälften so miteinander verbunden sind, dass bei einer Verschwenkung einer Gestängehälfte um ihre Drehachse die andere Gestängehälfte um ihre Drehachse gegenläufig mitgeführt wird. Diese letztendlich zwangsläufige Führung der Gestängehälften kann zwar bei einer Geradeausfahrt im Fall einer starken Abbremsung oder Beschleunigung Schäden oder Überlastungen vermeiden, nicht aber bei extremen Lenkbewegungen oder bei Bremsungen oder Beschleunigungen bei engen Kurvenfahrten. In derartigen Fällen kann das gegenläufige Mitführen der anderen Gestängehälfte Schäden verursachen. Wird beispielsweise bei einer Lenkbewegung die eine Gestängehälfte nach hinten bewegt und die andere Gestängehälfte nach vorne, so wird im Falle einer starken Abbremsung die eine Gestängehälfte nach vorne gedämpft abgebremst durchschwingen, die andere Gestängehälfte, die sich in einer Schwenkbewegung nach hinten befindet, wird in ihrer Schwenkbewegung extrem abgebremst und danach extrem beschleunigt nach vorne geschwenkt. Dies kann zu teuren Schäden an der Aufhängung des Spritzgestänges und auch am Spritzgestänge selbst führen.

Aufgabe der Erfindung ist es, ein Spritzgestänge mit zwei Gestängehälften zu schaffen, das die oben angesprochenen Nachteile nicht beinhaltet.

Die Aufgabe der Erfindung wird mit den Merkmalen des Patentanspruchs 1 gelöst.

Durch das Vorsehen eines ersten Federdämpfers, der beide Gestängehälften so vorgespannt verbindet, dass sie eine Einheit bilden, können die Gestängehälften im Falle einer Überlastung unabhängig voneinander frei nachgeben. Sie werden dabei noch von den zusätzlichen Federdämpfern unterstützt, die die Gestängehälften zusätzlich zum Hubsystem bzw. mittelbar zum Rahmen der Feldspritze gedämpft abstützen. Über die zusätzlichen Federdämpfer wird das Spritzgestänge als Einheit gedämpft geführt und über den ersten Federdämpfer werden die Gestängehälften zu einer Einheit zusammengefasst und so geführt, dass bei Überlastungen und extremen Lenkbewegungen die Gestängehälften unabhängig voneinander gedämpft nachgeben können.

Die Erfindung sieht vorteilhaft vor, dass die Gestängehälften um eine gemeinsame Achse horizontal schwenkbar ausgebildet sind. Diese Ausführungsform ermöglicht es, beide Gestängehälften um eine Achse schwenkbar anzuordnen, um so den Bauaufwand des Spritzgestänges insgesamt etwas günstiger zu gestalten.

Die Erfindung sieht in einer weiteren vorteilhaften Ausgestaltung vor, dass die Federdämpfer in ihrer dämpfenden Wirkung einstellbar oder per Regeleinrichtung dem Einsatzfall entsprechend regelbar ausgebildet sind. Je nach Einsatzfall kann die Funktion der Federdämpfer verändert oder angepasst werden. Zum Beispiel kann die Viskosität der Flüssigkeit in hydraulischen Federdämpfern verändert werden, um so die dämpfende Wirkung zu variieren. Es können auch mehrere Federdämpfer zu Einheiten zusammengefasst werden, die dann je nach Einzelfall über Ventile einzeln aktiviert oder abgeschaltet werden.

In Hinblick auf die Geometrie der jeweiligen Paare aus Armen und Federdämpfern ist vorgesehen, dass der erste Federdämpfer und die Arme in Bezug auf das Hubsystem auf der gegenüberliegenden Seite des Spritzgestänges angeordnet sind. Diese Anordnung leistet einen wesentlichen Beitrag zu der angesprochenen Einheit aus den Paaren von Armen und Federdämpfern mit dem erheblichen Vorteil der Einheitlichkeit der Gestängeausrichtung. Die Gestängehälften verhalten sich in ihrer Bewegung einheitlich wie ein durchgehender Balken, was eine besonders gleichmäßige Querverteilung der ausgebrachten Spritzmittel ermöglicht.

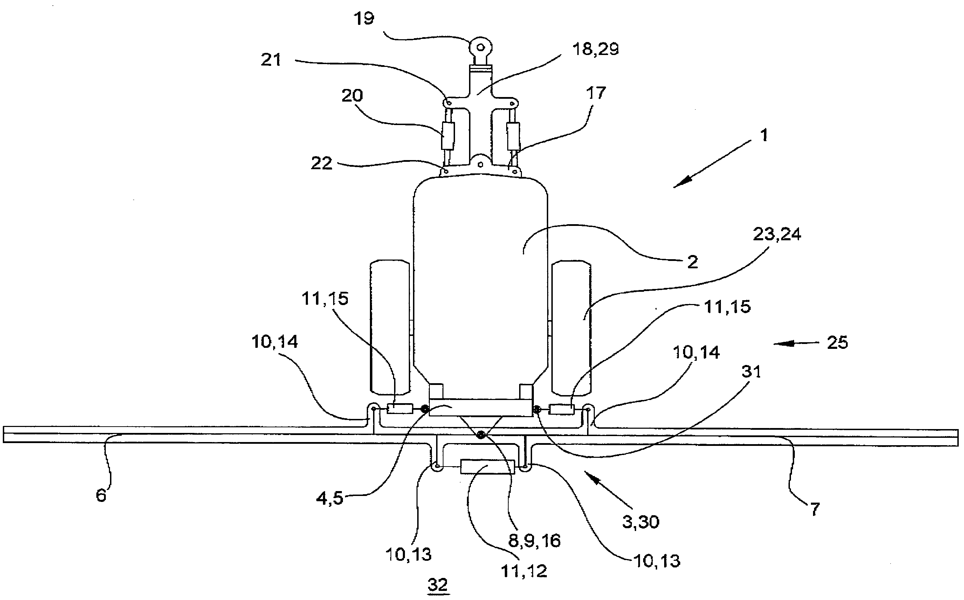

Weitere Einzelheiten der Erfindung sind der Figur zu entnehmen, die eine bevorzugte Ausführungsform des Spritzgestänges zeigt.

Die Figur zeigt eine angehängte Feldspritze 1 in Arbeitsstellung. Die Feldspritze besteht aus einem Rahmen 17, an dem vorne die Deichsel 18 mit Zugöse 19 angeordnet ist und hinten das Hubsystem 5 mit Pendelsystem 4 und Spritzgestänge 3. Die Deichsel 18 ist als Lenkdeichsel 29 ausgebildet, mit der die Lenkzylinder 20 über die Gelenke 21 gelenkig verbunden sind. Die Lenkzylinder 20 sind über die Gelenke 22 mit dem Rahmen 17 verbunden. Das Fahrwerk 23 mit den Rädern 24 ist im hinteren Bereich 25 der Feldspritze 1 angeordnet. Das Spritzgestänge 3 besteht aus zwei Gestängehälften 6, 7, die mehrteilig ausgebildet sind. Der Einfachheit halber wurden viele Einzelheiten wie zum Beispiel die Düsen, die Gelenke der einzelnen Gestängesegmente und auch der äußere Anfahrschutz nicht dargestellt. Die jeweilige Gestängehälfte 6, 7 ist über ihre Achse 8, 9 horizontal schwenkbar mit dem Pendelsystem 4 oder dem Hubsystem 5 verbunden. In diesem Fall sind die beiden Achsen 8, 9 zu einer gemeinsamen Achse 16 zusammen gefasst. Die Gestängehälften 6, 7 werden mittels der Federdämpfer 11 gedämpft geführt, die an Armen 10 im Abstand zu den Achsen 8, 9, 16 angreifen. Ein erster Federdämpfer 12 ist dabei über die Arme 13 mit den beiden Gestängehälften 6, 7 verbunden und sorgt dafür, dass die Gestängehälften 6, 7 eine Gestängeeinheit 30 bzw. das Spritzgestänge bilden. Nur bei einer Überlastung gibt der erste Federdämpfer 12 nach. Der erste Federdämpfer 12 wird dabei über die beiden zusätzlichen Federdämpfer 15 unterstützt, die mit den Armen 14 der Gestängehälften 6,7 sowie über die Gelenke 31 mit dem Pendelsystem 4 oder dem Hubsystem 5 gelenkig verbunden sind. Die zusätzlichen Federdämpfer 15 führen gedämpft das Spritzgestänge 3 bzw. die Gestängeeinheit 30. Der erste Federdämpfer 12 und die Arme 13 sind auf der in Bezug auf das Hubsystem 5 gegenüberliegenden, unteren Seite 32 des Spritzgestänges 6, 7 angeordnet. Dabei verhalten sich die Gestängehälften 6, 7 in ihrer Bewegung einheitlich wie ein durchgehender Balken. Mit der gedämpften Führung wird vereinfacht die Führung der Bauteile und die Tilgung von störenden Schwingungen beschrieben. Die erfinderische Lösung ist auch für angebaute Feldspritzen gedacht und nicht auf die dargestellte Ausführungsform beschränkt. Vielmehr zeigt die Figur nur eine vereinfachte Darstellung der Erfindung, die sehr unterschiedlich ausgeführt sein kann.

## Patentansprüche

1. Feldspritze (1) mit einem Rahmen (17), der mindestens einen Flüssigkeitsbehälter (2) und ein Spritzgestänge (3) mit zwei Gestängehälften (6, 7) aufnimmt, wobei das Spritzgestänge (3) über ein Pendelsystem (4) und ein Hubsystem (5) mit dem Rahmen (17) verbunden ist, wobei jede Gestängehälfte (6, 7) um eine Achse (8, 9) horizontal schwenkbar mit dem Hubsystem (5) verbunden ist, dass die Gestängehälften (6, 7) im Abstand zur Achse (8, 9) Arme (10, 13, 14) aufweisen, an denen Federdämpfer (11, 12, 15) angreifen, wobei ein erster Federdämpfer (12) jeweils an einen Arm (13) der Gestängehälften (6, 7) angreift und diese gegeneinander so vorgespannt verbindet, dass sie eine Einheit bilden,
**dadurch gekennzeichnet, dass**
jede Gestängehälfte (6, 7) sich über einen zusätzlichen Arm (14) über einen zusätzlichen Federdämpfer (15) gegen das Hubsystem (5) abstützend ausgebildet ist, und dass der erste Federdämpfer (12) und die Arme (13) in Bezug auf das Hubsystem (5) auf der gegenüberliegenden Seite (32) des Spritzgestänges (6, 7) angeordnet sind.

2. Feldspritze nach Anspruch 1,
**dadurch gekennzeichnet,**
**dass** die Gestängehälften (6, 7) um eine gemeinsame Achse (16) horizontal schwenkbar ausgebildet sind.

3. Feldspritze nach Anspruch 1 und 2,
**dadurch gekennzeichnet,**
**dass** die Federdämpfer (11) in ihrer dämpfenden Wirkung einstellbar oder per Regeleinrichtung dem Einsatzfall entsprechend regelbar ausgebildet sind.

## Claims

1. Field sprayer (1) having a frame (17) which carries at least one liquid container (2) and a sprayer boom (3) with two boom halves (6, 7), the sprayer boom (3) being connected to the frame (17) via a pendulum system (4) and a lifting system (5), each boom half (6, 7) being connected to the lifting system (5) in a horizontally pivotable manner about an axis (8, 9), the boom halves (6, 7) having arms (10, 13, 14) at a distance from the axis (8, 9) on which spring dampers (11, 12, 15) engage, wherein a first spring damper (12) engages an arm (13) of each of the boom halves (6, 7) and biases them against each other to form a unit, **characterized in that** each boom half (6, 7) is supported against the lifting system (5) by an additional arm (14) by an additional spring damper (15), and that the first spring damper (12) and the arms (13) are arranged on the opposite side (32) of the sprayer boom (6, 7) with respect to the lifting system (5).

2. Field sprayer according to claim 1,
**characterized in that**,
**in that** the boom halves (6, 7) are designed to pivot horizontally about a common axis (16).

3. Field sprayer according to claims 1 and 2,
**characterized in that**,
**in that** the damping effect of the spring dampers (11) is adjustable or are designed so that they can be controlled according to the application case.

## Revendications

1. Pulvérisateur agricole (1) comportant un châssis (17) qui reçoit au moins un réservoir de liquide (2) et une rampe de pulvérisation (3) avec deux moitiés de rampe (6, 7), la rampe de pulvérisation (3) étant reliée au châssis (17) par l'intermédiaire d'un système pendulaire (4) et d'un système de levage (5), chaque moitié de rampe (6, 7) étant reliée au système de levage (5) de manière à pouvoir pivoter horizontalement autour d'un axe (8, 9), les moitiés de rampe (6, 7) ayant des bras (10, 13, 14) à une distance de l'axe (8, 9) sur lequel s'engagent des amortisseurs à ressort (11, 12, 15), dans laquelle un premier amortisseur à ressort (12) engage un bras (13) de chacune des moitiés de rampe (6, 7) et les tend l'une contre l'autre pour former une unité, **caractérisé en ce que** chaque moitié de rampe (6), 7) est supporté contre le système de levage (5) par un bras supplémentaire (14) par un amortisseur à ressort supplémentaire (15), et **en ce que** le premier amortisseur à ressort (12) et les bras (13) sont disposés sur le côté opposé (32) de la rampe de pulvérisation (6, 7) par rapport au système de levage (5).

2. Pulvérisateur agricole selon la revendication 1,
**caractérisé en ce que**,
**en ce que** les moitiés de rampe (6, 7) sont conçues pour pivoter horizontalement autour d'un axe commun (16).

3. Pulvérisateur agricole selon les revendications 1 et 2,
**caractérisé en ce que**,
**en ce que** l'effet d'amortissement des amortisseurs à ressort (11) est réglable ou sont conçus de manière à pouvoir être commandés en fonction de l'application.
